# EUROPÄISCHE PATENTSCHRIFT

(11) **EP 2 116 079 B1**
(45) Veröffentlichungstag und Bekanntmachung des Hinweises auf die Patenterteilung: **05.12.2012**
(21) Anmeldenummer: 07866250.9
(22) Anmeldetag: 21.12.2007
(51) Int. Cl.: H04W 24/10

(54) **VERFAHREN ZUR NETZKENNDATEN-ERFASSUNG DURCH REGULÄRE NUTZER ZUR UNTERSTÜTZUNG VON AUTOMATISIERTEN PLANUNGS- UND OPTIMIERUNGSPROZESSEN IN ZELLULAREN MOBILFUNKNETZEN**
METHOD FOR NETWORK IDENTIFICATION ACQUISITION BY REGULAR USERS FOR SUPPORTING AUTOMATED PLANNING AND OPTIMIZATION PROCESSES IN CELLULAR MOBILE RADIO NETWORKS
PROCÉDÉ DE DÉTECTION DE DONNÉES CARACTÉRISTIQUES RÉSEAU PAR DES UTILISATEURS RÉGULIERS POUR LE SOUTIEN DE PROCESSUS DE PLANIFICATION ET D'OPTIMISATION AUTOMATISÉS DANS DES RÉSEAUX DE TÉLÉPHONIE MOBILE CELLULAIRES

(30) Priorität: 02.01.2007 DE 102007001305
(43) Veröffentlichungstag der Anmeldung: 11.11.2009
(73) Patentinhaber: Deutsche Telekom AG, 53113 Bonn (DE)
(72) Erfinder: KLATT, Axel, 50996 Köln (DE)
(74) Vertreter: Cohausz, Helge B.
(86) Internationale Anmeldenummer: PCT/EP2007/011327
(87) Internationale Veröffentlichungsnummer: WO 2008/080578

(56) Entgegenhaltungen:
- EP-A- 0 619 687
- EP-A- 0 946 007
- EP-A- 1 021 055
- WO-A-99/57823
- WO-A-03/059003
- GB-A- 2 360 173
- US-A- 5 694 451

## Beschreibung

Die vorliegende Erfindung betrifft ein Verfahren zur Erfassung von realen/aktuellen Kenngrößem eines Mobilfunksystems, beispielsweise nach GSM-, UMTS-, E-UTRAN/LTE oder WiMAX-Standard, durch ein Mobilfunkendgerät eines realen Nutzers dieses Mobilfunksystems, wobei die Kenngrößen mittels serienmäßigen Mobilfunkendgeräten von Nutzern dieses Mobilfunksystems, ohne zusätzliche externe Geräte zur Positionsbestimmung in einem in den Mobilfunkendgeräten vorhandenen Speicher erfasst und an eine zentrale oder dezentrale/verteilte Erfassungs-, Auswerte- und Verarbeitungseinheit im Mobilfunksystem übermittelt werden.

Ein Verfahren dieser Art ist aus der britischen Patentanmeldung GB 2 360 173 A bekannt. Weiterer Stand der Technik ist die Überprüfung entsprechender Kenngrößen eines Mobilfunknetzes durch dedizierte Messfahrten, die einen kostenintensiven Einsatz von Personal und Material erfordern. Weiterhin haben diese Verfahren den Nachteil, dass nur diskrete Teilbereiche eines Mobilfunksystems mit derartigen Methoden erfasst werden können, z. B. Messungen der Versorgungsgüte eines Mobilfunksystems entlang von Straßen und Autobahnen. Ein weiterer Nachteil besteht darin, dass diese Messfahrten nicht kontinuierlich und flächendeckend durchgeführt werden können und daher Messergebnisse nicht immer auf dem aktuellen Stand bzw. flächendeckend vorhanden sein können.

Eine optimierte Variante des Verfahrens der dedizierten Messfahrten zur Erfassung von Netzparametern wird in DE 199 00 543/ EP 1 021 055 A2 beschrieben: In dem dort beschriebenen Verfahren werden spezielle Nutzer eines Mobilfunksystems zur Erfassung relevanter Kenngrößen eines Mobilfunknetze herangezogen und diese erfassten Messwerte beim Auftreten eines zuvor bestimmten Events an eine Auswerteeinrichtung des Mobilfunknetzes mittels Signalisierungskanälen (SMS) überträgt. Zu Erfassung der Position wird ein externes Gerät ("Speicher- und Verarbeitungsmodul") zur Ermittlung der aktuellen Position des Mobilfunkgerätes innerhalb der Netztopologie benötigt (zusätzlich ggf. externer GPS-Empfänger und ggf. Personal Computer). Die Anwendung eines oder mehrerer externer Zusatzgeräte ("Speicher- und Verarbeitungsmodul" & GPS-Empfänger) stellen für einen normalen Mobilfunknutzer einen nicht zumutbaren Aufwand dar, womit die Anwendbarkeit dieses Verfahrens auf spezifisch ausgerüstete Anwender beschränkt bleibt (beispielsweise Busse, Taxis, LKWs etc, jedoch nicht "normale" Mobiltelefonnutzer).

Stand der Technik sind somit Erfassungssysteme für Kenndaten eines Mobilfunksystems, die die zu ermittelnden Daten auf Seiten des Nutzers durch ein Teilnehmerendgerät (MS: Mobilstation, UE: User Equipment) erfassen, einer externen Speicher- und Verarbeitungseinheit übermitteln und mittels Zusatzhardware (z.B. externen GPS-Empfänger) mit einer Ortsangabe (Position) versehen und über Nutzdatenkanäle (GPRS) oder Signalisierungskanäle mittels SMS (z.B. über den SDCCH-Kanal bei GSM) an das Mobilfunknetz zur Weiterverarbeitung / Auswertung leiten, vgl. DE 199 00 543/ EP 1 021 055 A2.

Alternativ sind auch Verfahren bekannt, die die aufgenommenen Daten in einer Datenspeichereinheit Zwischenspeichern, die zwecks Aufbereitung dieser Daten speziell ausgelesen werden muss; dieser Ansatz ist bei dedizierten Messfahrten in Mobilfunknetzen üblich. Eine derartige Verfahrensweise ist beispielsweise aus der EP 0 946 007 A2 bekannt. Sie beschreibt ein Verfahren und eine Anordnung zur Messung der Übertragungsqualität in Zellen von Mobilfunknetzen unter Verwendung von mobilen Stationen, die mit einem GPS-Empfänger versehen sind auf eine Aufzeichnungseinheit aufweisen. Zur Durchführung der Messung innerhalb einer Zelle wird ein Fahrzeug benötigt, in dem sich die mobile Station, beispielsweise ein Mobilfunkendgerät befindet. Bei dem Fahrzeug handelt es sich um ein Test-Fahrzeug, oder auch um einen Omnibus oder ein Taxi. Die mobile Station kann in deren Kofferraum transportiert werden. Die zu messende Zelle wird mit dem Fahrzeug durchfahren und die geographische Position und die Zeit zu bestimmten Zeitpunkten aufgezeichnet. Für andere Daten wird die Aufzeichnungseinheit nicht verwendet. Die Aufzeichnung kann auf einer Diskette erfolgen, wobei die Aufzeichnungseinheit entsprechend ein Diskettenlaufwerk umfasst. Dieses Verfahren zur Messung der Übertragungsqualität in Zellen von Mobilfunknetzen ist umständlich und liefert nur wenige Informationen über das Mobilfunksystem, da ausschließlich speziell ausgerüstete Fahrzeuge Messdaten sammeln.

Es ist die Aufgabe der Erfindung ein Verfahren zur Erfassung von realen/aktuellen Kenndaten eines Mobilfunksystems anzugeben, das die vorgenannten Nachteile überwindet und es auf zuverlässige und preiswerte Art gestattet, flächendeckend Kenndaten eines Mobilfunksystems zu erfassen, wobei der geräteseitige Aufwand sowie ein erforderlicher Personaleinsatz deutlich reduziert sein soll.

Diese Aufgabe wird erfindungsgemäß durch ein Verfahren mit den Merkmalen des Anspruchs 1 gelöst.

Bevorzuge Ausgestaltungen und Weiterbildungen der Erfindung ergeben sich aus den abhängigen Ansprüchen.

Erfindungsgemäß erfolgt die Erfassung von Kenngrößen eines Mobilfunksystems, insbesondere eines zellularen Mobilfunknetzes, dadurch, dass die Kenngrößen mittels serienmäßigen Mobilfunkendgeräten von Nutzern dieses Mobilfunksystems, ohne zusätzliche externe Geräte zur Positionsbestimmung, in einem in den Mobilfunkendgeräten vorhandenen Speicher erfasst und an eine zentrale oder dezentrale/verteilte Erfassungs-, Auswerte- und Verarbeitungseinheit im Mobilfunksystem übermittelt werden, wobei die Erfassung der Kenngrößen (306, 308) dann erfolgt, wenn eine Kommunikationsverbindung abbricht.

Erfindungsgemäß ist vorgesehen, dass relevante Kenndaten des Mobilfunknetzes an der aktuellen Position des Mobilfunkteilnehmers dieses Mobilfunknetzes direkt durch das Mobilfunkendgerät des Nutzers unter normalen Nutzungsbedingungen erfasst werden, optional mit einer Positionsangabe versehen werden können, und dass diese Messdaten vom Mobilfunkendgerät über standardisierte Signalisierungskanäle eines Mobilfunksystems, vorzugsweise nach GSM-, UMTS-, E-UTRAN-/LTE- oder WiMAX-Standard, an eine Auswerteeinheit des Mobilfunkbetreibers übermittelt werden.

Die anschließende Weiterverarbeitung der so übermittelten Daten lässt sich vorteilhaft für eine Planung und Optimierung der Funknetzinfrastruktur (Nachbarschaftsplanungen, Einstellung weiterer Betriebsparameter etc), sowie aber auch für die bedarfsorientierte Bereitstellung von spezifischen Informationsinhalten für den Mobilfunknutzer (Kunden) einsetzen. Eine Motivation hierzu stellt auch im Hinblick auf Minimierung von betrieblichen Aufwänden die Unterstützung von Prozeduren dar, die bestimmte Abläufe im Mobilfunknetz und deren Parameter in einem selbst optimierenden Charakter (Ziel: Self-Optimising Network, SON) unterstützen.

Die in dieser Schrift dargestellten Messwerte und Verfahren bilden die Grundlage für die selbst optimierenden Prozeduren, sind aber nicht auf die dargestellten Messwerte, Prozeduren und Szenarien beschränkt. Eine Ausführungsform des erfindungsgemäßen Verfahrens sieht auch eine auch automatische Erfassung und Bereitstellung der aufgenommenen Messdaten vor, ohne dass der Nutzer eines Mobilfunkendgerätes von sich aus aktiv werden muss.

Vorteil der vorliegenden Erfindung gegenüber dem Stand der Technik ist der Verzicht auf zusätzliche externe Geräte in Form von Mess- oder Positionserfassungshard- oder-Software und die Verwendungsmöglichkeit ohne zusätzlichen Aufwand auf Seiten des Nutzers, sowie ohne dessen Unterstützung.

Für die Anwendung des hier beschriebenen Verfahrens werden handelsübliche Mobilfunkendgeräte, vorzugsweise GSM-, UMTS-, E-UTRAN-/LTE oder WiMAX-Endgeräte, eingesetzt. Weitere Vorteile des erfindungsgemäßen Verfahrens ist die Möglichkeit, die Messgebiete vorzudefinieren und ohne manuellen Eingriff oder Zusatzgeräte-Einsatz ein bestimmtes Gebiet durch die normalen Mobilfunkteilnehmer messtechnisch auswerten zu lassen. Ein wesentlicher Vorteil einer Ausführungsform des erfindungsgemäßen Verfahrens ist die Möglichkeit der Messdurchführung beim Eintritt in ein vordefiniertes Erfassungsgebiet.

Besonders vorteilhaft ist bei dem erfindungsgemäßen Verfahren zur Erfassung von Kenngrößen eines Mobilfunkssystems, insbesondere eines zellularen Mobilfunknetzes, dass Kenngrößen des Mobilfunksystems, insbesondere des zellularen Mobilfunknetzes, mittels Mobilfunkendgeräten erfasst und an eine zentrale oder dezentrale/verteilte Erfassungs-, Auswerte- und Verarbeitungseinheit im Netz übermittelt werden.

Bei dem Mobilfunksystem bzw. Mobilfunknetz kann es sich insbesondere um ein Netz nach GSM-, UMTS-, E-UTRAN/LTE- oder WiMAX-Standard handeln, jedoch ist die Anwendung des Verfahrens nicht auf die genannten Netzstandards beschränkt. Unter Kenngrößen sind insbesondere Leistungsdaten, Reichweite, Signalstärke, Netzauslastung, Verfügbarkeit an der aktuellen Position, Versorgungsgüte und dergleichen subsumierbar. Die Erfassung und Weiterleitung der Kenngrößen oder Kenndaten des Mobilfunksystems oder Mobilfunknetzes erfolgt somit unter Verwendung serienmäßiger Teilnehmerendgeräte von Nutzern dieses Netzes, ohne zusätzliche externe Geräte zur Positionsbestimmung, wie insbesondere externe GPS-Empfänger oder ein Speicher- und Verarbeitungsmodul.

Der Begriff GPS-Empfänger wird dabei und im Folgenden als Synonym für jegliche Art von Vorrichtung zur Positionsbestimmung mittels Satelliten respektive Satellitennavigationssystemen verstanden, ohne dass dies eine Einschränkung auf das Global Positioning System GPS darstellt. Es kann sich um ein beliebiges satellitengestütztes Positionierungsverfahren handeln.

Vorzugsweise erfolgt die Übermittlung der Kenndaten an die Erfassungs-, Auswerte- und Verarbeitungseinheit über Signalisierungskanäle des jeweiligen Systems.

In einer bevorzugten Ausführungsform können das Verfahren sowie hierzu die notwendigen Prozeduren integraler Bestandteil des GSM-, UMTS-, E-UTRAN/LTE- oder WiMAX-Systems sein und weder die Erfassung der Kenndaten, noch die Verknüpfung der Messungen mit der aktuellen Position, noch die Übermittlung an die Erfassungs-, Auswerte- und Verarbeitungseinheit erfolgen auf Applikationsebene, sondern es können Signalisierungskanäle des jeweiligen Systems genutzt werden.

Vorzugsweise werden standardisierte Kenngrößen des Mobilfunksystems mit einer Positionsangabe des aktuellen Erfassungsortes verknüpft und diese an das die Erfassungs-, Auswerte- und Verarbeitungseinheit des Mobilfunksystem übermittelt. Bei Mobilfunksystemen nach dem UMTS- oder E-UTRAN-/LTE-Standard kann es sich bei den Kenngrößen insbesondere um CPICH Ec/No, CPICH RSCP, CPICH RSRP, Pathloss, SIR, BLER, Datendurchsatz, Informationen über das "active set", Sendeleistung und dergleichen handeln. Bei Mobilfunksystemen nach GSM/GERAN-Standard kann es sich bei den Kenngrößen insbesondere um RxLEV, RxQual, Sendeleistung, Pathloss handeln.

Die genannten Kenngrößen können mit einer Positionsangabe des aktuellen Erfassungsortes verknüpft und an das die Erfassungs-, Auswerte- und Verarbeitungseinheit des Mobilfunksystems übermittelt werden.

In einer bevorzugten Ausführungsform des erfindungsgemäßen Verfahrens wird den erfassten Kenngrößen ein Zeitstempel zugefügt, insbesondere kann vor der Übermittlung an die Erfassungs-, Auswerte- und Verarbeitungseinheit ein Zeitstempel durch das Mobilfunkendgerät zugefügt werden oder es kann durch die Erfassungs-, Auswerte- und Verarbeitungseinheit den erhaltenen Kenngrößen im Moment des Empfangs ein Zeitstempel zugefügt werden.

Durch das Hinzufügen eines Zeitstempels sind weitere Auswertungen unter Berücksichtigung der Zeit, wie beispielsweise Zeiten maximaler Netzauslastung am Tage im Vergleich zu Zeiten minimaler Netzauslastung in der Nacht, möglich.

In einer besonders bevorzugten Ausführungsform werden die gewonnenen Messdaten nicht nur zur Aufrechterhaltung der eventuell vorhandenen Verbindung genutzt werden, sondern es werden diese mit Positionsangaben und eventuell Zeitstempel versehenen Daten zur Auswertung bzw. Weiterverarbeitung an eine die Erfassungs-, Auswerte- und Verarbeitungseinheit des Mobilfunknetzes geleitet.

Bevorzugt erfolgt die Übermittlung aktuell erfasster Kenngrößen des Mobilfunksystems immer dann an das Mobilfunksystem, wenn die aktuelle Aufenthaltsposition des mobilen Endgerätes bestimmt wurde, insbesondere bei Nutzung von Location Based Services, d.h. solcher Dienste, die positionsabhängig verfügbar sind. Die Bestimmung der Position eines Mobilfunkendgerätes innerhalb eines Mobilfunknetzes erfolgt mehr oder minder regelmäßig, sodass die Auslösung der Erfassung und Übermittlung aktueller Kenngrößen des Mobilfunknetzes in Abhängigkeit der Bestimmung der Position des Mobilfunkendgerätes eine optimale Datenerfassung möglichst flächendeckender Daten gestattet. Beispielsweise kann die Erfassung und Übermittlung dann erfolgen, wenn der Teilnehmer des Mobilfunksystems bestimmte positionsabhängige Dienste abfragt wie z.B. bei Nutzung von Location Based Services, da bei Nutzung solcher Dienste die Position des Mobilfunkendgerätes bekannt ist und somit eine Zuordnung der erfassten Kenndaten zu einer Position ohne weiteres möglich ist.

Vorzugsweise werden die Messungen aktueller Kenngrößen eines Mobilfunksystems zur Bestimmung und Optimierung der Versorgungsqualität eines Mobilfunknetzes ausgewertet und aufbereitet, die von Mobilfunkendgeräten, insbesondere von realen Mobilfunkteilnehmern, ermittelt und an das System übertragen wurden.

Auf diese Weise ist eine Netzoptimierung mit gegenüber den Verfahren nach dem Stand der Technik deutlich verminderten Aufwand möglich, insbesondere stehen flächendeckende Daten zur Auswertung zur Verfügung.

Vorzugsweise wird die Positionsermittlungsanfrage eines mobilen Endgerätes in einem Mobilfunksystem mit einem Zeitstempel versehen und diese Position mit den zugehöriger Anfragezeit oder aufgrund einer durch den Nutzer initiierten Anfrage der Position in einer Auswerteeinheit gespeichert und/oder ausgewertet.

Vorzugsweise wird die Erfassung und Bereitstellung oder Verknüpfung der aktuellen Position mit an diesem Ort erfassten Messdaten der Kenngrößen mittels eines in das Mobilfunkendgerät integrierten GPS-Empfängers durchgeführt.

Die Erfassung und Bereitstellung bzw. Verknüpfung der aktuellen Position mit an diesem Ort erfassten Messdaten kann vorzugsweise immer dann durchgeführt werden, wenn sich das Endgerät in ein durch den Betreiber des Netzwerkes vorbestimmtes Gebiet bewegt.

Durch die Auslösung der Erfassung und Übermittlung der Kenndaten des Mobilfunknetzes in Verbindung mit einem bestimmten, d.h. festlegbaren räumlich begrenzten Gebiet des Mobilfunknetzes, umfassend eine oder mehrere Zellen eines zellularen Mobilfunknetzes, ist eine gezielte Datenerfassung und räumliche Zuordnung möglich, insbesondere kann auf diese Weise gezielt die Verfügbarkeit und Netzqualität in bestimmtes Gebieten geprüft und ausgewertet werden.

Bei einer besonders bevorzugten Ausführungsform werden die Erfassung und Bereitstellung bzw. Verknüpfung der aktuellen Position mit an diesem Ort erfassten Messdaten immer dann durchführt, wenn die Positionsmessung zu einer vordefinierten Zeit oder innerhalb eines vordefinierten Zeitintervalls stattgefunden hat.

Hierdurch können bestimmte Zeitintervalle, beispielsweise Zeiten maximaler Netzbelastung am Tage, einer Auswertung unterzogen werden.

Vorzugsweise wird die Erfassung von Netzgüteinformationen durch einen regulären Mobilfunkteilnehmer immer dann durchgeführt und an eine die Erfassungs-, Auswerte- und Verarbeitungseinheit im Netz übermittelt, wenn das Teilnehmerendgerät einen vordefinierten Bereich des Mobilfunknetzwerkes erreicht hat.

Dadurch ist es möglich, Kenndaten des Mobilfunknetzes in Verbindung in einem bestimmten, d.h. festlegbaren räumlich begrenzten Gebiet des Mobilfunknetzes, umfassend eine oder mehrere Zellen eines zellularen Mobilfunknetzes, zu ermitteln und auszuwerten. Somit ist eine gezielte Datenerfassung und räumliche Zuordnung möglich, insbesondere kann auf diese Weise gezielt die Verfügbarkeit und Netzqualität in bestimmtes Gebieten geprüft und ausgewertet werden.

Die Vordefinition des Erfassungsbereiches kann durch eine in Mobilfunknetzen benutze Gebietskennung erfolgen, insbesondere Location Area (LA), d.h. der Aufenthaltsbereich des Mobilfunkendgerätes, oder Routing Area (RA) oder UTRAN Registration Area (URA) oder Tracking Area (TA) oder Zelle oder mehrere der vorgenannten Gebietskennungen in Verbindung.

Vorzugsweise kann eine Vordefinition des Erfassungsbereiches durch eine Beschreibung eines Gebiets-Polygons erfolgen, wobei ein Teilnehmerendgerät die aktuelle Position mittels eines integrierten GPS-Empfängers ermittelt und bei Eintritt in das vordefinierte Gebiets-Polygon selbständig mit der Erfassung der Kenngrößen und der Übermittlung an die die Erfassungs-, Auswerte- und Verarbeitungseinheit im Mobilfunknetz beginnt.

Vorzugsweise ist die Erfassung sowie die Übermittlung der erfassten Daten unabhängig vom Betriebzustand (active / idle) des Teilnehmerendgerätes. Die Zuverlässigkeit der Anwendung des erfindungsgemäßen Verfahrens kann somit unabhängig von dem Schaltzustand verschiedener Mobilfunkendgeräte realisiert werden.

Vorzugsweise erfolgt die Übermittlung der erfassten Daten auf einem Signalisierungskanal des jeweiligen Mobilfunksystems und nicht über üblicherweise Nutzerdaten vorbehaltenen Kanälen (SMS, Traffic Channel). Es wird dadurch im Gegensatz zu bekannten Verfahren nach dem Stand der Technik kein Verkehrskanal belegt, oder keine Kanalressourcen durch das Versenden von SMS benötigt.

Bevorzugt basiert die Erfassung der Kenndaten oder Kenngrößen des Mobilfunknetzes auf standardisierten Ereignissen, insbesondere den UMTS -oder E-UTRAN Measurement reporting events, insbesondere kann ein Messvorgang, der beim Unter- oder Überschreiten von Schwellwerten von Kenngrößen angestoßen werden, wobei die Schwellwerte insbesondere vorher teilnehmerendgerätbezogen vom Netz definiert wurden.

Alternativ oder kumulativ dazu kann die Erfassung der Kenndaten auf standardisierten Ereignissen, insbesondere den UMTS oder E-UTRAN Measurement reporting events, basieren und nach Auftreten eines definierten Ereignisses die Messungen sowie die Übermittlung der Kennwerte für eine bestimmte Zeit im periodischen Abstand erfolgen. Hierdurch ist es möglich, eine periodische Datenerfassung (periodic reporting) zu realisieren.

Als Auslöser für die Durchführung einer Erfassung und Übermittlung von Netzkenndaten können somit insbesondere die für UMTS in 3GPP TS, 25.331, Kapitel 14 definierten Ereignisse dienen.

Erfindungsgemäß basiert die Erfassung der Kenndaten auf definierten Ausnahmesituationen, nämlich auf einem Abbruch einer Kommunikationsverbindung. Insbesondere können nach dem Auftreten einer Ausnahmesituation die Messungen sowie die Übermittlung der Kennwerte für eine bestimmte Zeit im periodischen Abstand erfolgen. Hierdurch ist es möglich, eine periodische Datenerfassung (periodic reporting) zu realisieren. Gleichzeitig werden mögliche Versorgungslücken des Mobilfunknetzes identifiziert, wenn beispielsweise ein Gesprächsabbruch als Auslöser für eine Kennwertermittlung dient. Hierbei können vorzugsweise auch weitere Informationen über den Ort, den Zeitpunkt, sowie die ursprüngliche Zelle (Zell Identität) und ggf. die Zielzelle (Zell Identität) bei einem gescheiterten Handover an die Erfassungs-, Auswerte- und Verarbeitungseinheit des Mobilfunknetzes übermittelt werden.

Vorzugsweise erfolgt eine anonymisierte Speicherung der übermittelten Kenngrößen oder Kenndaten des Mobilfunknetzes. Durch die anonymisierte Datenspeicherung wird insbesondere dem erforderlichen Datenschutz genügt.

Bevorzugt erfolgt eine statistische Auswertung der übermittelten Kenngrößen oder Kenndaten des Mobilfunknetzes. Somit können die erfassten Netzkenndaten insbesondere für eine Optimierung des Netzes herangezogen werden. Vorzugsweise geben die Kenngrößen oder Kenndaten des Mobilfunknetzes die Versorgungsgüte und/oder Netzparameter, sowie ggf. Ort und Zeitpunkt eines Verbindungsabbruchs mit weiteren Parametern des Mobilfunknetzes wieder.

In einer bevorzugten Ausführungsform werden die Kenngrößen oder Kenndaten während festlegbarer Zeitfenster erhoben und übermittelt.

Vorzugsweise werden die Positionen von Versorgungslücken des Mobilfunknetzes in dem Mobilfunkendgerät zumindest temporär gespeichert und an die Erfassungs-, Auswerte- und Verarbeitungseinheit des Mobilfunknetzes übermittelt, sobald wieder eine Verbindung zu dem Mobilfunknetz besteht. Auf diese Weise können Versorgungslücken des Mobilfunknetzes auf einfache und vorteilhafte Weise identifiziert und dokumentiert werden.

Die Aufgabe wird erfingungsgemäß auch gelöst durch ein Computerprogramm gemäß Anspruch 24 mit einem Programmcode, der auf einem Mobilfunkendgerät ausgeführt das erfindungsgemäße Verfahren durchführt sowie durch ein Computerprogramm gemäß Anspruch 25 mit einem Programmcode, der auf einer Datenverarbeitungsanlage ausgeführt das erfindungsgemäße Verfahren durchführt, sowie durch eine Anordnung von Mobilfunkendgeräten zur Erfassung der Kenngrößen eines Mobilfunksystems gemäß Anspruch 26.

In den Figuren sind verschiedene Ausführungsformen des erfindungsgemäßen Verfahrens dargestellt und werden nachfolgend näher erläutert. Es zeigen:
Figur 1 zeigt schematisch Zellen eines Mobilfunknetzes und eine Definition eines Messgebietes anhand von CI, LA, RA, TA etc.
Figur 2 zeigt schematisch Zellen eines Mobilfunknetzes und eine Definition eines Messgebietes anhand geographischer Daten eines Polygons.
Figur 3 zeigt schematisch Zellen eines Mobilfunknetzes und eine Definition eines Messgebietes durch einen Kreis mit Radius R.
Figur 4 zeigt beispielhaft den Informationsaustausch zwischen Erfassungs-, Auswerte- und Verarbeitungseinheit (EAV), Basisstationssystem (BTS) und Mobilfunkendgerät (UE).

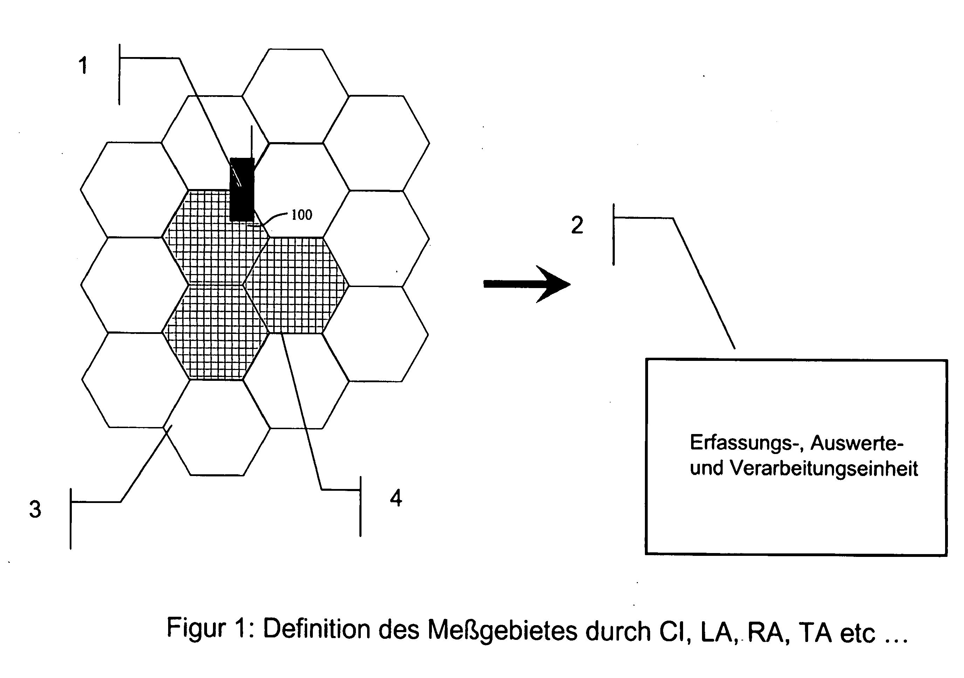

In Figur 1 sind schematisch Zellen eines Mobilfunknetzes und eine Definition eines Messgebietes anhand von Funkzellenidentität CI, Location Area LA, d.h. Aufenthaltsbereich eines Mobilfunkendgerätes 1, Routing Area RA, Tracking Area TA etc. dargestellt.

Aufgrund der besonderen Eigenschaften eines Mobilfunkkanals sind besondere Prozeduren notwendig, um diesen Kanal für eine Datenübertragung zu nutzen. Diese Prozeduren werden durch bestimmte Kennwerte beschrieben und eingestellt. Für die Planung und den Betrieb von Mobilfunksystemen beispielsweise nach dem GSM-, UMTS-, E-UTRAN-/LTE- oder WiMAX-Standard sind Kenntnisse über die aktuellen Kenngrößen (RxLEV, RxQual bei GSM, bzw. CPICH RSCP, CPICH Ec/No, Pathloss, SIR, das "active set" bei UMTS oder die verwendeten Subfrequenzen bei OFDM-Systemen wie E-UTRAN-/LTE oder WiMAX) im gesamten Gebiet eines Mobilfunknetzes 3 unerlässlich.

Mit Bezug auf Figur 1 besteht der entscheidende Vorteil des hier beschriebenen Verfahrens gegenüber dem Stand der Technik darin, dass zur Ermittlung der Messdaten und der Verknüpfung des aktuellen Erfassungsortes keinerlei externes oder zusätzliches Gerät außer einem serienmäßigen standardisierten Mobilfunkendgerät 1 mit integrierter Positionierungserfassung, z. B. ein integrierter GPS-Empfänger, benötigt werden. Weiterhin besteht der Vorteil des beschriebenen Verfahrens darin, dass die Ermittlung und Übertragung der Kenngrößen des Mobilfunknetzes 3 an die Ermittlung der Position 100 des mobilen Teilnehmerendgerätes 1 gekoppelt sein kann und mittels standardisierter Verfahren auf Signalisierungskanälen (z.B. nach GSM-, UMTS-, E-UTRAN-/LTE- oder WiMAX-Standard) zur Auswertung übertragen wird; es wird also im Gegensatz zu bekannten Verfahren kein Verkehrskanal belegt, oder keine Kanalressourcen durch das Versenden von SMS wie in DE 199 00 543 beschrieben, benötigt.

Ein weiterer Vorteil des erfindungsgemäßen Verfahrens ist durch die ohnehin notwendige Einleitung von Messungen (sowohl der Netzparameter als auch der Position) gegeben, welcher zu einer erheblichen Einsparung von Batterieleitung führt: Das mobile Endgerät 1 leitet z.B. die Ermittelung seiner eigenen Position 100 automatisch selbständig ein um ortsbezogene Informationen zu erhalten und überträgt lediglich zusätzlich weitere Informationen an das Mobilfunknetz 3, die dem Mobilfunknetzbetreiber Informationen über den Zustand seines Netzes 3 an der aktuellen Position 100 des Nutzers geben. Zur Ermittlung der eigenen Position 100 eines Mobilfunkgerätes und der zur Verfügung Stellung dieser Information für einen Location Based Service (LBS) sind in der Regel Verbindungen zwischen der Mobilstation 1 und dem Mobilfunknetz 3 zur Übertragung der ermittelten Position notwendig. In der Regel werden im Zusammenhang mit dem Aufbau dieser Verbindung auch Messdaten des Teilnehmerendgerätes 1 auf Anforderung des Netzes 3 (z.B. aufgrund der Signalisierung von einem RNC in einem UMTS-Netz) erfasst und dem RNC zur Aufrechterhaltung der Verbindung durch das Endgerät 1 übermittelt (bspw. CPICH RSCP oder Ec/No Messungen). Diese werden hierzu nach dem erfindungsgemäßen Verfahren jedoch mit der aktuellen Position 100 des Erfassungsortes verknüpft und sowohl an den RNC (hier im Fall von UMTS), den eNB (im Fall von E-UTRAN/LTE) zur Aufrechterhaltung der Verbindung, als auch an eine entsprechende Erfassungs-, Auswerte- und Verarbeitungseinheit 2 zur Erfassung der Netzparameter im Mobilfunknetz 3 übermittelt.

Die Ermittlung der Position 100 der aktuell durchgeführten Netzgüte-Messung erfolgt beispielsweise durch Verwendung eines integrierten GPS-Empfänger im mobilen Endgerät 1 oder durch andere bekannte Verfahren (basierend auf "Cell Identity", OTDOA, ETDOA, etc. [3GPP TS 25.305]), welche jedoch aufgrund ihrer Beschaffenheit eine weniger exakte Ermittlung der aktuellen Position des mobilen Endkunden bedingen.

Alternativ erfolgt die Ermittlung der Position 100 und der entsprechenden Kenngrößen des Mobilfunknetzes 3 entsprechend dem erfindungsgemäßen Verfahren vorzugsweise immer dann, wenn die Position 100 des mobilen Endgerätes 1 auf Anforderung des Nutzers oder einer von ihm bestimmten Applikation durchgeführt wird.

Die ermittelten Kenngrößen des Mobilfunknetzwerkes 3 werden zur anschließenden Speicherung und Weiterbearbeitung ohne die den Teilnehmer identifizierenden Merkmale (z.B. IMSI, P-TMSI) an eine vom Netzbetreiber bereitgestellten Erfassungs-, Auswerte- und Verarbeitungseinheit 2 übermittelt. Die hier von einer Vielzahl von Teilnehmern eintreffenden Kenngrößen können statistisch ausgewertet und durch die Vielzahl der vorliegenden Informationen zu einer Optimierung des Mobilfunknetzes 3 herangezogen werden.

Als Nebeneffekt dieses Verfahrenes können die vorliegenden anonymisierten Daten dazu verwendet werden, eine Aussage zu ermitteln, an welchen örtlichen Positionen eines Mobilfunknetze zu welchen Zeiten jeweils entsprechende Anfragen zur Bestimmung der Position eines mobilen Endgerätes durchgeführt werden. Hieraus lassen sich vorteilhaft standortbezogene Informationsdienste bereitstellen.

Eine Weiterbildung des erfindungsgemäßen Verfahrens (Figur 1) ermöglicht es dem Netzbetreiber, innerhalb eines bestimmten Gebietes 4 (z.B. auf Basis von Location Areas (LA), Routing Areas (RA) oder Cell ID bei Mobilfunksystemen nach UMTS- und GSM-Standard, bzw. auf UTRAN Registration Area (URA) Basis (bei UMTS-Mobilfunksystemen), oder Tracking Areas (TA) bei E-UTRAN-/LTE-Systemen, Mobilfunkgeräte mit eingebautem GPS-Empfängern 1 so zu konfigurieren, dass diese nach Eintritt in ein vordefiniertes Gebiet 4 (Cell ID, LA, RA, URA, TA) vordefinierte Netzgüte-Messungen durchführen und an die Erfassungs-, Auswerte- und Weiterverarbeitungseinheit des Netzes 2 übermitteln. Das vordefinierte Gebiet 4 umfasst in dem in Figur 1 dargestellten Beispiel mehrere Zellen des zellularen Mobilfunknetzes 3.

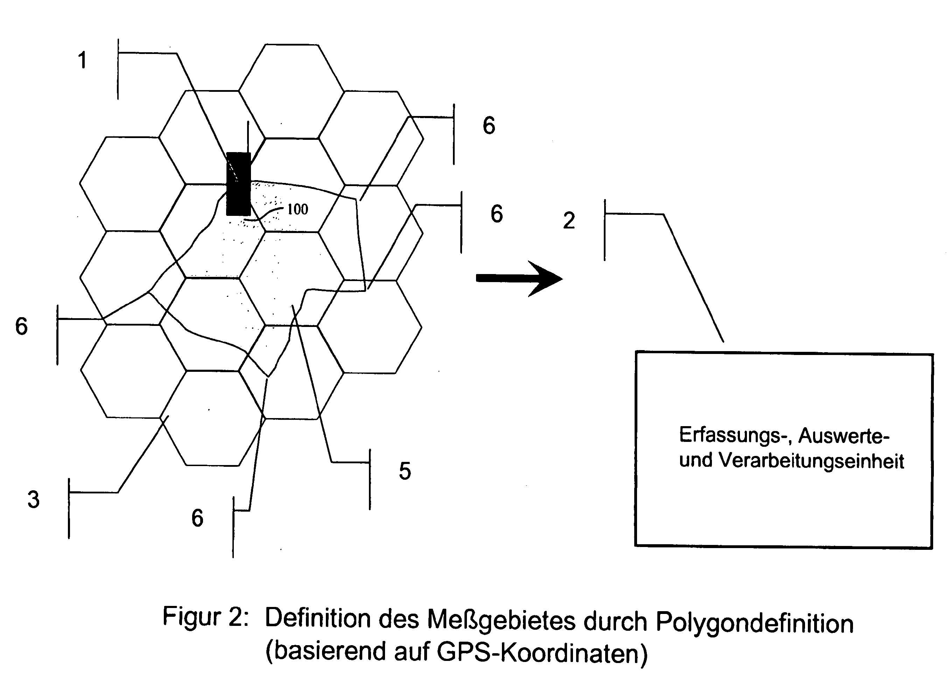

Mit Bezugnahme auf Figur 2 werden in einer anderen Ausbildung des erfindungsgemäßen Verfahrens als Gebiete beispielsweise die Definition von Polygonen 5 innerhalb des Mobilfunknetzes 3 vorgeschlagen, wobei das vorkonfigurierte Teilnehmerendgerät 1 beim Eintritt in dieses Gebiet 5 vordefinierte Messungen ausführt und an die Erfassungs-, Auswerte- und Verarbeitungseinheit 2 übermittelt. Beispielweise könnte basierend auf Positions-Eckpunkten 6 (nach dem Gauß-Krüger System oder einem anderen GIS-System) ein Gebiet 5 definiert werden in dem genaue Messdaten für einen Mobilfunkbetreiber interessant sind.

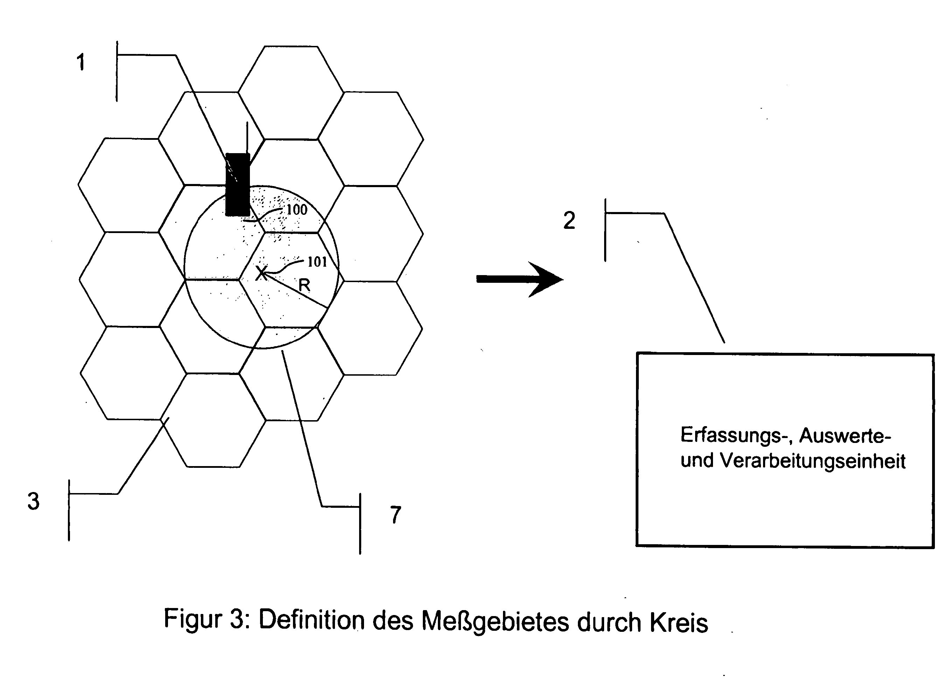

Gemäß Figur 3 kann die Form des vordefinierten Gebietes 5 hierbei beispielsweise ein Kreis 7 mit einem Radius R um eine definierte Position 101 sein.

In nicht dargestellten Alternativen ist das Gebiet definiert durch ein Rechteck oder einen frei definierten Polygonzug. Der entscheidende Vorteil bei dieser Ausbildung besteht in der reduzierten Anforderung an die Anzahl der Messungen, da ein exakt definiertes Gebiet 4, 5 oder 7 oder erfasst werden kann.

Als Zusatzmerkmal kann für alle vorstehend beschriebenen Ausführungsformen auch noch eine Zeitkomponente herangezogen werden: eine Vorkonfiguration der Messungen enthält also zusätzlich eine Zeitkomponente, wobei die zu ermittelnden Messungen nur während eines vordefinierten Zeitinterwals (z.B. nur zwischen 16:00h und 20:00h) durchgeführt und an die Erfassungs-, Auswerte- und Verarbeitungseinheit 2 des Netzes 3 übermittelt werden (oder die Kombination aus Orts- und Zeitbasis). Die Möglichkeit der Vorkonfiguration der Erfassungszeit bietet dem Netzbetreiber die Möglichkeit die realen Messdaten in bestimmten Zeitintervallen durch die Nutzer ermitteln zu lassen (z.B. nur während der sog. "busy hour" (Hauptverkehrsstunde) oder nur während bestimmter Nachtstunden, z.B. wenn ein Netzupgrade durchgeführt wurde und eigene Messungen zu kostenintensiv sind. Weitere Bedingungen für eine Messung sind denkbar, wie die Messung beim Unter- oder Überschreiten von Schwellwerten von Kenngrößen, die Teilnehmerendgerät bezogen vom Netz definiert werden können.

Weiterhin ist auch die lokale Speicherung der erfassten Messdaten mit Position 100 und Erfassungszeit im Endgerät 1 des Kunden denkbar, wobei die lokale Speicherung eine Übermittlung der Daten in verkehrsschwachen Zeiten (z.B. nachts) ermöglicht. Die Vorkonfiguration eines definierten Erfassungsgebietes 4, 5 oder 7 ermöglicht dem Netzbetreiber bestimmte Gebiete seines Netzes 3 durch Netzteilnehmer 1 erfassen zu lassen, die für ihn von besonderem Interesse sind und sich ggf. dynamisch ändern können.

Alle Ausführungsformen des vorgeschlagenen Verfahrens erlauben die Erfassung von Kenngrößen des Mobilsystems unabhängig davon, ob aktuelle eine Kommunikation zwischen Teilnehmerendgerät 1 und Netz 3 läuft (z.B. während eines Gespräches/Datenübertragung - "active mode") oder sich das Teilnehmerendgerät 1 lediglich in Empfangsbereitschaft befindet ("idle mode"). Selbst wenn keine Verbindung zwischen Teilnehmerendgerät 1 und Netz 3 möglich ist, wie zum Beispiel in einem schlecht versorgten Gebiet, können Messwerte, wie Informationen zu Nachbarnetzen und Netzen anderer Zugangstechnologien im Teilnehmerendgerät 1 gespeichert werden und bei Vorliegen einer neuen Verbindung zum Netz 3 dem Netz zur Verfügung gestellt werden.

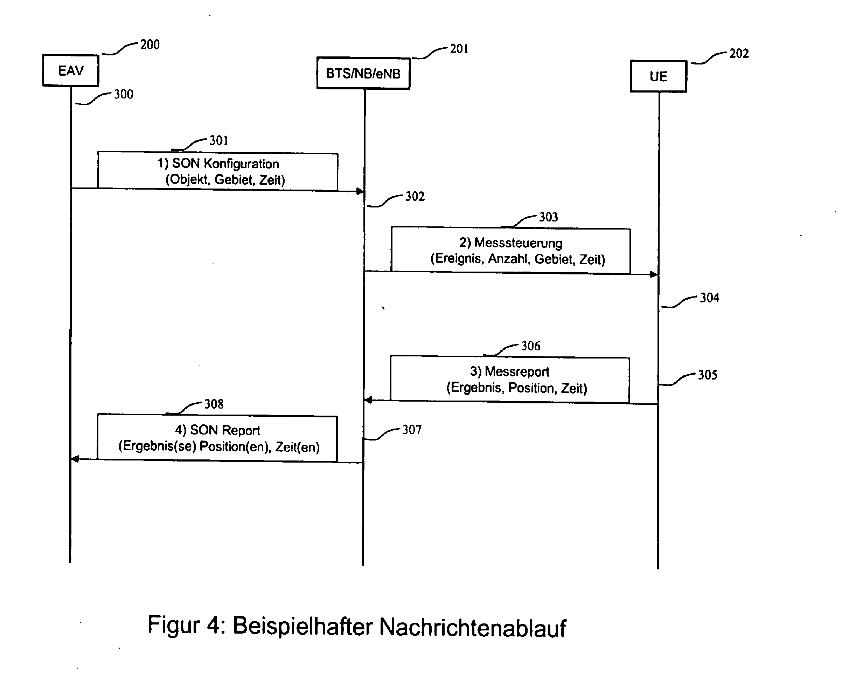

In Figur 4 ist ein beispielhafter Kommunikationsablauf für die Konfiguration, das Ermitteln und das Berichten der gewünschten Messungen dargestellt. Die Erfassung-, Auswerte- und Verarbeitungseinheit "EAV" 200 des Mobilfunknetzes 3 entscheidet in Schritt 300 über notwendige Erfassung von Kenndaten des Mobilfunksystems. Hierzu ist eine Entscheidung über das Messobjekt ("Objekt", bspw. CPICH Ec/No), das Messgebiet ("Gebiet") und ggf. eine zeitliche Einschränkung der Messungen ("Zeit") notwendig. Die Erfassung-, Auswerte- und Verarbeitungseinheit 200 bestimmt die entsprechenden BTS/NB/eNB 201 basierend auf den vorliegenden geografischen Topologien des Mobilfunknetzes. Werden beispielsweise Messungen in einer bestimmten Location Area (LA) des Mobilfunknetzes benötigt, so werden alle BTS/NB/eNB 201 die zu dieser LA gehörig sind, mittels einer entsprechenden Nachricht 301 angewiesen, Mobilfunkendgeräte in Bereich des jeweiligen BTS/NB/eNB 201 mit Messungen zu beauftragen. Dieses kann alle oder nur einen Teil der Mobilfunkendgeräte in dem entsprechenden Bereich umfassen, welches im Schritt 302 durch den BTS/NB/eNB 201 entschieden wird. An die ausgewählten Mobilfunkendgeräte (UE) 202 sendet der BTS/NB/eNB 201 eine entsprechende Konfigurationsnachricht 303 mit den entsprechenden Angaben zu "Ereignis" - beispielsweise wenn ein bestimmter Messwert ("Objekt") einen eingestellten Wert über- oder unterschritten hat - die Anzahl der zu sendenden Berichte "Anzahl", das Gebiet ("Gebiet") in welchem der Messauftrag Gültigkeit hat und ggf. einen zeitliche Begrenzung wenn die Messungen ausgeführt werden sollen ("Zeit"). Nach Empfang der Konfigurationsnachricht 303 überprüft das UE 202 im Schritt 304 die entsprechende aktuelle Situation mit der in der Konfiguration angegebenen Messvorschrift. Tritt im Schritt 305 das entsprechende Ereignis ein so führt das UE die entsprechenden Messungen durch, verknüpft sie mit der Position der Messung und ggf. der Zeit und sendet sie in einem MESSREPORT 306 an den entsprechenden BTS/NB/eNB 201. Im Schritt 307 entfernt der BTS/NB/eNB 201 teilnehmerspezifische Kennungen (z. B. TMSI) des reportenden UEs 202 und sendet eine Messprotokollnachricht SON REPORT 308 (SON: "Self-Optimising Network")an die Erfassung-, Auswerte- und Verarbeitungseinheit 200. Alternativ kann der BTS/NB/eNB im Schritt 307 eine Anzahl von MESSREPORTEN sammeln und zusammen im Schritt 308 and die Erfassung-, Auswerte- und Verarbeitungseinheit 200 senden. Es werden somit die ermittelten Daten, d.h. die Kenngrößen 306 bzw. die in der Basisstation eNB 201 zusammen getragenen Daten, d.h. die Kenngrößen 308 an die Erfassung-, Auswerte- und Verarbeitungseinheit 200 übertragen.

Die eintreffenden SON REPORTs 308 der jeweiligen Basisstation BTS/NB/eNB 201 verschiedener UEs 202 werden anschließend in der Erfassung-, Auswerte- und Verarbeitungseinheit 200 weiterverarbeitet und für den Planungs- und Optimierungsprozess des Mobilfunknetzbetreiber aufbereitet und weiter verarbeitet.

### Liste der Bezugszeichen und Abkürzungen

- 1: Mobilfunkendgerät
- 2: Erfassungs-, Auswerte- und Verarbeitungseinheit (EAV)
- 3: Mobilfunknetz
- 4: Gebiet
- 5: Polygon (Gebiet)
- 6: Positions-Eckpunkt
- 7: Gebiet (Kreis)

- 100: Position des Mobilfunkendgeräts 1
- 200: EAV (Erfassungs-, Auswerte- und Verarbeitungseinheit)
- 201: BTS/NB/eNB (Basisstation)
- 202: UE (User Equipment, Mobilfunkendgerät)

- 300-308: Verfahrensschritte

- 300: Auslösung einer Messung
- 301: Auslösenachricht
- 302: Auswahl der Mobilfunkendgeräte im gewählten Gebiet
- 303: Konfigurationsnachricht an das Mobilfunkendgerät
- 304: Auswertung der Konfigurationsnachricht durch das Mobilfunkendgerät
- 305: Erfassung der Netzkenndaten durch das Mobilfunkendgerät
- 306: Kenngrößen des Mobilfunknetzes (einzelner Messreport)
- 307: Zusammenstellung mehrerer Messreport
- 308: Kenngrößen des Mobilfunknetzes (Übersichtsmessreport)

- BTS: Base-Transceiver Station (Basisstation)
- CI: Cell Identifier (Funkzellenidentität)
- CPICH: Common Pilot Channel (UMTS)
- eNB: Enhanced Node B (Basisstation)
- E-UTRAN: Enhanced Universal Terrestrial Radio Access Network
- GPRS: General Packet Radio System
- GPS: Global Positioning System (Satellitengestütztes Positionierungssystem)
- GSM: Global System for Mobile Communications
- IMSI: International Mobile Subscriber Identity
- LA: Location Area (Aufenthaltsbereich des Mobilfunkendgeräts)
- LBS: Location Based Services
- LTE: Long Term Evolution
- NB: Node-B
- OFDM: Orthogonal Frequency Division Multiplex
- OTDOA: Observed Time Difference of Arrival
- P-TMSI: Packet Temporary Mobile Subscriber Identity
- RA: Routing Area
- RNC: Radio Network Controller
- RSCP: Received Signal Code Power
- RSRP: Received Signal Reference Power
- RxLEV: Reception Level (Empfangspegel)
- Rxqual: Reception Quality (Empfangsqualität)
- SDCCH: Standalone Dedicated Control Channel
- SIR: Signal to Interference Ratio
- SMS: Short Message Service
- SON: Self Optimizing Network
- TA: Tracking Area
- UE: User Equipment (Teilnehmerendgerät = Mobilfunkendgerät)
- UMTS: Universal Mobile Telecommunication System
- URA: UTRAN Registration Area
- WiMAX: Worldwide Interoperability for Microwave Access)

## Patentansprüche

1. Verfahren zur Erfassung von Kenngrößen eines Mobilfunksystems (3), insbesondere eines zellularen Mobilfunknetzes (3), bei dem die Kenngrößen (306, 308) mittels Mobilfunkendgeräten (1, 202) von Nutzern dieses Mobilfunksystems (3), ohne zusätzliche externe Geräte zur Positionsbestimmung in einem in den Mobilfunkendgeräten (1, 202) vorhandenen Speicher erfasst und an eine zentrale oder dezentrale/verteilte Erfassungs-, Auswerte- und Verarbeitungseinheit (2, 200) im Mobifunksystem (3) übermittelt werden, **dadurch gekennzeichnet, dass** die Erfassung der Kenngrößen (306, 308) dann erfolgt, wenn eine Kommunikationsverbindung abbricht.

2. Verfahren nach Anspruch 1, **dadurch gekennzeichnet, dass** die Übermittlung der erfassten Kenngrößen (306, 308) auf einem Signalisierungskanal des jeweiligen Mobilfunksystems (3) erfolgt.

3. Verfahren nach Anspruch 1 oder 2, **dadurch gekennzeichnet, dass** die Kenngrößen (306, 308) standardisierte Kenngrößen des Mobilfunksystems (3) sind und diese mit einer Positionsangabe des aktuellen Erfassungsortes (100) verknüpft und an die Erfassungs-, Auswerte- und Verarbeitungseinheit (2, 200) des Mobilfunksystems (3) übermittelt werden.

4. Verfahren nach Anspruch 3, **dadurch gekennzeichnet,**
- **dass** die standardisierten Kenngrößen CPICH Ec/No, CPICH RSCP, CPICH RSRP, Pathloss, SIR, BLER, der Datendurchsatz, Informationen über das "active set", die Zell-Identitäten oder die Sendeleistung sind und das Mobilfunksystem (3) den UMTS- oder E-UTRAN-/LTE-Standard benutzt, oder
- **dass** die standardisierten Kenngrößen RxLEV, RxQual, Sendeleistung oder Pathloss sind und das Mobilfunksystem (3) den GSM/GERAN-Standard benutzt, und

5. Verfahren nach einem der vorhergehenden Ansprüche, **dadurch gekennzeichnet, dass** den erfassten Kenngrößen (306, 308) ein Zeitstempel hinzugefügt wird, wobei entweder vor der Übermittlung an die Erfassungs-, Auswerte- und Verarbeitungseinheit (2, 200) ein Zeitstempel durch das Mobilfunkendgerät (1, 202) hinzugefügt wird oder durch die Erfassungs-, Auswerte- und Verarbeitungseinheit (2, 200) den erhaltenen Kenngrößen (306, 308) im Moment des Empfangs ein Zeitstempel hinzugefügt wird.

6. Verfahren nach einem der vorhergehenden Ansprüche, **dadurch gekennzeichnet, dass** die Übermittlung der erfassten Kenngrößen (306, 308) des Mobilfunksystems (3) immer dann an das Mobilfunksystem (3) erfolgt, wenn die aktuelle Aufenthaltsposition (100) des Mobilfunkendgerätes (1, 202) bestimmt wurde.

7. Verfahren nach einem der vorhergehenden Ansprüche, **dadurch gekennzeichnet, dass** die Messungen der Kenngrößen (306, 308) des Mobilfunksystems (3) zur Bestimmung und Optimierung der Versorgungsqualität des Mobilfunksystems (3) ausgewertet und aufbereitet werden.

8. Verfahren nach einem der vorhergehenden Ansprüche, **dadurch gekennzeichnet, dass** eine Positionsermittlungsanfrage eines der Mobilfunkendgeräte (1, 202) in dem Mobilfunksystem (3) mit einem Zeitstempel versehen wird und die ermittelte Position (100) mit der zugehörigen Anfragezeit in einer Auswerteeinheit gespeichert und/oder ausgewertet wird.

9. Verfahren nach einem der vorhergehenden Ansprüche 3 bis 8, **dadurch gekennzeichnet, dass** die Erfassung und Bereitstellung oder Verknüpfung der aktuellen Position (100) mit an diesem Ort erfassten Messdaten der Kenngrößen (306, 308) mittels eines in das Mobilfunkendgerät (1, 202) integrierten GPS-Empfängers durchgeführt wird.

10. Verfahren nach einem der vorhergehenden Ansprüche 3 bis 9, **dadurch gekennzeichnet, dass** die Erfassung und Bereitstellung oder Verknüpfung der aktuellen Position (100) mit an diesem Ort erfassten Messdaten der Kenngrößen (306, 308) immer dann durchgeführt werden, wenn sich das Mobilfunkendgerät (1, 202) in ein durch den Betreiber des Mobilfunksystems (3) vorbestimmtes Gebiet (4, 5, 7) bewegt.

11. Verfahren nach einem der vorhergehenden Ansprüche 3 bis 10, **dadurch gekennzeichnet, dass** die Erfassung und Bereitstellung oder Verknüpfung der aktuellen Position (100) mit an diesem Ort erfassten Messdaten der Kenngrößen (306, 308) immer dann durchführt werden, wenn die Positionsmessung zu einer vordefinierten Zeit oder innerhalb eines vordefinierten Zeitintervalls stattgefunden hat.

12. Verfahren nach einem der vorhergehenden Ansprüche, **dadurch gekennzeichnet, dass** die Erfassung der Kenngrößen (306, 308) immer dann durchgeführt und an die Erfassungs-, Auswerte- und Verarbeitungseinheit (2, 200) im Mobilfunksystem (3) übermittelt wird, wenn das Mobilfunkendgeräten (1, 202) einen vordefinierten Bereich (4, 5, 7) des Mobilfunksystems (3) erreicht hat.

13. Verfahren nach Anspruch 12, **dadurch gekennzeichnet, dass** die Vordefinition des Bereiches (4, 5, 7) durch eine in Mobilfunknetzen benutze Gebietskennung, insbesondere LA, RA, URA, TA, Zelle oder eine Kombination hieraus, definiert ist.

14. Verfahren nach einem der Ansprüche 12 oder 13, **dadurch gekennzeichnet, dass** die Vordefinition des Bereiches (4, 5, 7) durch eine Beschreibung eines Gebiets-Polygons (5) erfolgt, wobei eines der Mobilfunkendgeräte (1, 202) die aktuelle Position (100) mittels eines integrierten GPS-Empfängers ermittelt und bei Eintritt in das vordefinierte Gebiets-Polygon (5) selbständig mit der Erfassung der Kenngrößen (306, 308) und der Übermittlung an die die Erfassungs-, Auswerte- und Verarbeitungseinheit (2, 200) im Mobilfunksystem (3) beginnt.

15. Verfahren nach einem der vorhergehenden Ansprüche, **dadurch gekennzeichnet, dass** die Erfassung sowie die Übermittlung der erfassten Kenngrößen (306, 308) unabhängig vom Betriebszustand (active / idle) des Mobilfunkendgeräts (1, 202) ist.

16. Verfahren nach einem der vorhergehenden Ansprüche, **dadurch gekennzeichnet, dass** die Erfassung der Kenngrößen (306,308) zusätzlich durch einen teilnehmerendgerätbezogen vom Mobilfunksystem (3) definieren Messvorgang erfolgt, der bei einem Unter- oder Überschreiten von Schwellwerten von Kenngrößen angestoßen wird.

17. Verfahren nach einem der vorhergehenden Ansprüche, **dadurch gekennzeichnet, dass** die Erfassung der Kenngrößen (306, 308) zusätzlich dann erfolgt, wenn ein standardisiertes Ereignis eintritt, wobei nach Auftreten eines solchen Ereignisses die Messungen sowie die Übermittlung der Kenngrößen (306, 308) für eine bestimmte Zeit im periodischen Abstand erfolgen.

18. Verfahren nach einem der vorhergehenden Ansprüche, **dadurch gekennzeichnet, dass** nach dem Auftreten eines Abbruchs der Kommunikationsverbindung die Messungen sowie die Übermittlung der Kenngrößen (306, 308) für eine bestimmte Zeit im periodischen Abstand erfolgen.

19. Verfahren nach einem der vorhergehenden Ansprüche, **dadurch gekennzeichnet, dass** eine anonymisierte Speicherung der übermittelten Kenngrößen (306, 308) des Mobilfunksystems (3) erfolgt.

20. Verfahren nach einem der vorhergehenden Ansprüche, **dadurch gekennzeichnet, dass** eine statistische Auswertung der übermittelten Kenngrößen (306, 308) des Mobilfunksystems (3) erfolgt.

21. Verfahren nach einem der vorhergehenden Ansprüche, **dadurch gekennzeichnet, dass** die Kenngrößen (306, 308) des Mobilfunksystems (3) die Versorgungsgüte und/oder Netzparameter des Mobilfunksystems (3) wiedergeben.

22. Verfahren nach einem der vorhergehenden Ansprüche, d ad u rch gekennzeichnet, dass die Kenngrößen (306, 308) während festlegbarer Zeitfenster erhoben und übermittelt werden.

23. Verfahren nach einem der vorhergehenden Ansprüche, **dadurch gekennzeichnet, dass** die erfassten Kenngrößen (306, 308) in dem Mobilfunkendgerät (1) zumindest temporär gespeichert und an die Erfassungs-, Auswerte- und Verarbeitungseinheit (2, 200) des Mobilfunksystems (3) übermittelt werden, sobald wieder eine Verbindung zu dem Mobilfunksystem (3) besteht.

24. Computerprogramm mit Mitteln zur Durchführung des Verfahrens nach einem der Ansprüche 1 bis 23 bei Ausführung des Computerprogramms auf einem Mobilfunkendgerät (1, 202).

25. Computerprogramm mit Mitteln zur Durchführung des Verfahrens nach einem der Ansprüche 1 bis 23 bei Ausführung des Computerprogramms auf einer Datenverarbeitungsanlage.

26. Anordnung von Mobilfunkendgeräten (1, 202) zur Erfassung der Kenngrößen (306, 308) eines Mobilfunksystems (3), insbesondere eines zellularen Mobilfunknetzes (3), wobei in den Mobilfunkendgeräten (1, 202) mindestens ein Speicher und/oder eine Datenverarbeitungseinheit vorhanden sind, und wobei die Mobilfunkendgeräte (1, 202) über Mittel verfügen um beim Betrieb in dem Mobilfunksystem (3) die Kenngrößen (306, 308) gemäß einem der Verfahrensansprüche 1 bis 23 zu erfassen, verarbeiten und an das Mobilfunksystem (3) zu übermitteln.

## Claims

1. Method for capturing parameters from a mobile radio system (3), particularly a cellular mobile radio network (3), in which the parameters (306, 308) are captured by means of mobile radio terminals (1, 202) of users of this mobile radio system (3), without additional external appliances for position determination, in a memory that is present in the mobile radio terminals (1, 202) and are transmitted to a central or local/distributed capture, evaluation and processing unit (2, 200) in the mobile radio system (3), **characterized in that** the parameters (306, 308) are captured when a communication link terminates.

2. Method according to Claim 1, **characterized in that** the captured parameters (306, 308) are transmitted on a signalling channel in the respective mobile radio system (3).

3. Method according to Claim 1 or 2, **characterized in that** the parameters (306, 308) are standardized parameters in the mobile radio system (3), and said parameters are logically combined with a position statement from the current capture location (100) and are transmitted to the capture, evaluation and processing unit (2, 200) of the mobile radio system (3).

4. Method according to Claim 3, **characterized in that** the standardized parameters are CPICH Ec/No, CPICH RSCP, CPICH RSRP, Pathloss, SIR, BLER, the data throughput, information about the "active set", the cell identities or the transmission power, and the mobile radio system (3) uses the UMTS or E-UTRAN-/LTE standard, or
- **in that** the standardized parameters are RxLEV, RxQual, transmission power or Pathloss, and the mobile radio system (3) uses the GSM/GERAN standard.

5. Method according to one of the preceding claims, **characterized in that** the captured parameters (306, 308) have a timestamp added to them, wherein either a timestamp is added by the mobile radio terminal (1, 202) prior to the transmission to the capture, evaluation and processing unit (2, 200) or the capture, evaluation and processing unit (2, 200) adds a timestamp to the parameters (306, 308) obtained at the moment of reception.

6. Method according to one of the preceding claims, **characterized in that** the captured parameters (306, 308) from the mobile radio system (3) are transmitted to the mobile radio system (3) whenever the current position (100) at which the mobile radio terminal (1, 202) is located has been determined.

7. Method according to one of the preceding claims, **characterized in that** the measurements from the parameters (306, 308) from the mobile radio system (3) are evaluated and conditioned in order to determine and optimize the quality of supply in the mobile radio system (3).

8. Method according to one of the preceding claims, **characterized in that** a position-finding request from one of the mobile radio terminals (1, 202) in the mobile radio system (3) is provided with a timestamp, and the position found (100) is stored and/or evaluated with the associated request time in an evaluation unit.

9. Method according to one of the preceding Claims 3 to 8, **characterized in that** the current position (100) is captured and provided or logically combined with measurement data captured at this location from the parameters (306, 308) by means of a GPS receiver integrated in the mobile radio terminal (1, 202).

10. Method according to one of the preceding Claims 3 to 9, **characterized in that** the current position (100) is captured and provided or logically combined with measurement data captured at this location from the parameters (306, 308) whenever the mobile radio terminal (1, 202) moves into an area (4, 5, 7) that is predetermined by the operator of the mobile radio system (3).

11. Method according to one of the preceding Claims 3 to 10, **characterized in that** the current position (100) is captured and provided or logically combined with measurement data captured at this location from the parameters (306, 308) whenever the position measurement has taken place at a predefined time or within a predefined time period.

12. Method according to one of the preceding claims, **characterized in that** the parameters (306, 308) are captured and transmitted to the capture, evaluation and processing unit (2, 200) in the mobile radio system (3) whenever the mobile radio terminal (1, 202) has reached a predefined region (4, 5, 7) of the mobile radio system (3).

13. Method according to Claim 12, **characterized in that** the predefinition of the region (4, 5, 7) is defined by an area identifier that is used in mobile radio networks, particularly LA, RA, URA, TA, cell or a combination of these.

14. Method according to either of Claims 12 and 13, **characterized in that** the region (4, 5, 7) is predefined by a description of an area polygon (5), wherein one of the mobile radio terminals (1, 202) finds the current position (100) using an integrated GPS receiver and, upon entry into the predefined area polygon (5), automatically starts the capture of the parameters (306, 308) and the transmission to the capture, evaluation and processing unit (2, 200) in the mobile radio system (3).

15. Method according to one of the preceding claims, **characterized in that** the capture and the transmission of the captured parameters (306, 308) are independent of the operating state (active/idle) of the mobile radio terminal (1, 202).

16. Method according to one of the preceding claims, **characterized in that** the parameters (306, 308) are additionally captured by a measurement process that is defined by the mobile radio system (3) on a subscriber terminal basis and that is initiated when threshold values of parameters are undershot or exceeded.

17. Method according to one of the preceding claims, **characterized in that** the parameters (306, 308) are additionally captured when a standardized event occurs, wherein the occurrence of such an event is followed by the measurements and by the transmission of the parameters (306, 308) for a particular time at the periodic interval.

18. Method according to one of the preceding claims, **characterized in that** the occurrence of termination of the communication link is followed by the measurements and by the transmission of the parameters (306, 308) for a particular time at the periodic interval.

19. Method according to one of the preceding claims, **characterized in that** the transmitted parameters (306, 308) from the mobile radio system (3) are stored in anonymized form.

20. Method according to one of the preceding claims, **characterized in that** the transmitted parameters (306, 308) from the mobile radio system (3) are statistically evaluated.

21. Method according to one of the preceding claims, **characterized in that** the parameters (306, 308) from the mobile radio system (3) reproduce the grade of supply and/or network parameters from the mobile radio system (3).

22. Method according to one of the preceding claims, **characterized in that** the parameters (306, 308) are collected and transmitted during stipulatable time windows.

23. Method according to one of the preceding claims, **characterized in that** the captured parameters (306, 308) are stored in the mobile radio terminal (1) at least temporarily and transmitted to the capture, evaluation and processing unit (2, 200) of the mobile radio system (3) as soon as there is a connection to the mobile radio system (3) again.

24. Computer program having means for carrying out the method according to one of Claims 1 to 23 when the computer program is executed on a mobile radio terminal (1, 202).

25. Computer program having means for carrying out the method according to one of Claims 1 to 23 when the computer program is executed on a data processing installation.

26. Arrangement of mobile radio terminals (1, 202) for capturing the parameters (306, 308) from a mobile radio system (3), particularly a cellular mobile radio network (3), wherein the mobile radio terminals (1, 202) contain at least one memory and/or a data processing unit, and wherein the mobile radio terminals (1, 202) have means for capturing, processing and transmitting to the mobile radio system (3) the parameters (306, 308) according to one of method Claims 1 to 23 during operation in the mobile radio system (3).

## Revendications

1. Procédé de collecte de grandeurs caractéristiques d'un système de radiocommunication mobile (3), notamment d'un réseau de radiocommunication mobile cellulaire (3), selon lequel les grandeurs caractéristiques (306, 308) sont collectées dans une mémoire présente dans les terminaux de radiocommunication mobile (1, 202) d'utilisateurs de ce système de radiocommunication mobile (3) au moyen des terminaux de radiocommunication mobile (1, 202), sans appareils externes supplémentaires de détermination de la position et sont communiquées à une unité de collecte, d'interprétation et de traitement (2, 200) centrale ou décentralisée/distribuée dans le système de radiocommunication mobile (3), **caractérisé en ce que** la collecte des grandeurs caractéristiques (306, 308) s'effectue lorsqu'une liaison de communication se coupe.

2. Procédé selon la revendication 1, **caractérisé en ce que** la communication des grandeurs caractéristiques (306, 308) s'effectue sur un canal de signalisation du système de radiocommunication mobile (3) correspondant.

3. Procédé selon la revendication 1 ou 2, **caractérisé en ce que** les grandeurs caractéristiques sont des grandeurs caractéristiques normalisées du système de radiocommunication mobile (3) et celles-ci sont combinées avec une indication de position du lieu de collecte (100) courant et communiquées à l'unité de collecte, d'interprétation et de traitement (2, 200) du système de radiocommunication mobile (3).

4. Procédé selon la revendication 3, **caractérisé en ce que**
- les grandeurs caractéristiques normalisées sont CPICH Ec/No, CPICH RSCP, CPICH RSRP, l'affaiblissement de trajet, SIR, BLER, le débit de données, des informations sur le « jeu actif », les identités de cellule ou la puissance d'émission et le système de radiocommunication mobile (3) utilise la norme UMTS ou E-UTRAN-/LTE, ou
- les grandeurs caractéristiques normalisées sont RxLEV, RxQual, la puissance d'émission ou l'affaiblissement de trajet et le système de radiocommunication mobile (3) utilise la norme GSM/GERAN.

5. Procédé selon l'une des revendications précédentes, **caractérisé en ce qu'**un horodatage est rajouté aux grandeurs caractéristiques (306, 308) collectées, un horodatage étant soit rajouté par le terminal de radiocommunication mobile (1, 202) avant la communication à l'unité de collecte, d'interprétation et de traitement (2, 200), soit rajouté par l'unité de collecte, d'interprétation et de traitement (2, 200) aux grandeurs caractéristiques (306, 308) reçues au moment de la réception.

6. Procédé selon l'une des revendications précédentes, **caractérisé en ce que** la communication des grandeurs caractéristiques (306, 308) collectées du système de radiocommunication mobile (3) s'effectue toujours au système de radiocommunication mobile (3) lorsque la position de séjour (100) actuelle du terminal de radiocommunication mobile (1, 202) a été déterminée.

7. Procédé selon l'une des revendications précédentes, **caractérisé en ce que** les mesures des grandeurs caractéristiques (306, 308) du système de radiocommunication mobile (3) sont interprétées et conditionnées en vue de déterminer et d'optimiser la qualité de distribution du système de radiocommunication mobile (3).

8. Procédé selon l'une des revendications précédentes, **caractérisé en ce qu'**une demande de détection de la position de l'un des terminaux de radiocommunication mobile (1, 202) dans le système de radiocommunication mobile (3) est munie d'un horodatage et la position déterminée (100) avec l'heure d'interrogation associée est mémorisée et/ou interprétée dans une unité d'interprétation.

9. Procédé selon l'une des revendications précédentes 3 à 8, **caractérisé en ce que** la collecte et la mise à disposition ou la combinaison de la position actuelle (100) avec les données de mesure des grandeurs caractéristiques (306, 308) collectées à cet endroit sont réalisées au moyen d'un récepteur GPS intégré dans le terminal de radiocommunication mobile (1, 202).

10. Procédé selon l'une des revendications précédentes 3 à 9, **caractérisé en ce que** la collecte et la mise à disposition ou la combinaison de la position actuelle (100) avec les données de mesure des grandeurs caractéristiques (306, 308) collectées à cet endroit sont toujours réalisées lorsque le terminal de radiocommunication mobile (1, 202) se déplace dans une région (4, 5, 7) prédéfinie par l'exploitant du système de radiocommunication mobile (3).

11. Procédé selon l'une des revendications précédentes 3 à 10, **caractérisé en ce que** la collecte et la mise à disposition ou la combinaison de la position actuelle (100) avec les données de mesure des grandeurs caractéristiques (306, 308) collectées à cet endroit sont toujours réalisées lorsque la mesure de la position a eu lieu à un moment prédéfini ou à l'intérieur d'un intervalle de temps prédéfini.

12. Procédé selon l'une des revendications précédentes, **caractérisé en ce que** la collecte des grandeurs caractéristiques (306, 308) est toujours réalisée et communiquée à l'unité de collecte, d'interprétation et de traitement (2, 200) dans le système de radiocommunication mobile (3) lorsque le terminal de radiocommunication mobile (1, 202) a atteint une zone prédéfinie (4, 5, 7) du système de radiocommunication mobile (3).

13. Procédé selon la revendication 12, **caractérisé en ce que** la prédéfinition de la zone (4, 5, 7) est définie par un identifiant de région utilisé dans les réseaux de radiocommunication mobile, notamment LA, RA, URA, TA, cellule ou une combinaison de ceux-ci.

14. Procédé selon l'une des revendications 12 ou 13, **caractérisé en ce que** la prédéfinition de la zone (4, 5, 7) est effectuée par une description d'un polygone de région (5), l'un des terminaux de radiocommunication mobile (1, 202) déterminant la position (100) actuelle au moyen d'un récepteur GPS intégré et commençant automatiquement la collecte des grandeurs caractéristiques (306, 308) et la communication à l'unité de collecte, d'interprétation et de traitement (2, 200) dans le système de radiocommunication mobile (3) lors de l'entrée dans le polygone de région (5) prédéfini.

15. Procédé selon l'une des revendications précédentes, **caractérisé en ce que** la collecte ainsi que la communication des grandeurs caractéristiques (306, 308) collectées sont indépendantes de l'état opérationnel (actif / en veille) du terminal de radiocommunication mobile (1, 202).

16. Procédé selon l'une des revendications précédentes, **caractérisé en ce que** la collecte des grandeurs caractéristiques (306, 308) s'effectue en plus par le biais d'un processus de mesure défini par le système de radiocommunication mobile (3) en fonction du terminal d'abonné, lequel est déclenché en cas de franchissement vers le bas ou vers le haut de valeurs de seuil de grandeurs caractéristiques.

17. Procédé selon l'une des revendications précédentes, **caractérisé en ce que** la collecte des grandeurs caractéristiques (306, 308) s'effectue en plus lorsqu'il se produit un événement normalisé, les mesures ainsi que la communication des grandeurs caractéristiques (306, 308) s'effectuant à intervalles périodiques pendant un temps donné après la survenance d'un tel événement.

18. Procédé selon l'une des revendications précédentes, **caractérisé en ce qu'**après que se soit produite une interruption de la liaison de communication, les mesures ainsi que la communication des grandeurs caractéristiques (306, 308) s'effectuent à intervalles périodiques pendant un temps donné.

19. Procédé selon l'une des revendications précédentes, **caractérisé en ce qu'**une mémorisation rendue anonyme des grandeurs caractéristiques (306, 308) communiquées du système de radiocommunication mobile (3) est effectuée.

20. Procédé selon l'une des revendications précédentes, **caractérisé en ce qu'**une interprétation statistique des grandeurs caractéristiques (306, 308) communiquées du système de radiocommunication mobile (3) est effectuée.

21. Procédé selon l'une des revendications précédentes, **caractérisé en ce que** les grandeurs caractéristiques (306, 308) du système de radiocommunication mobile (3) restituent la qualité de distribution et/ou des paramètres de réseau du système de radiocommunication mobile (3).

22. Procédé selon l'une des revendications précédentes, **caractérisé en ce que** les grandeurs caractéristiques (306, 308) sont relevées et communiquées pendant des créneaux temporels pouvant être fixés.

23. Procédé selon l'une des revendications précédentes, **caractérisé en ce que** les grandeurs caractéristiques (306, 308) collectées sont mémorisées au moins temporairement dans le terminal de radiocommunication mobile (1) et sont communiquées à l'unité de collecte, d'interprétation et de traitement (2, 200) du système de radiocommunication mobile (3) dès qu'il existe de nouveau une liaison avec le système de radiocommunication mobile (3).

24. Programme informatique comprenant des moyens pour mettre en oeuvre le procédé selon l'une des revendications 1 à 23 lorsque le programme informatique est exécuté sur un terminal de radiocommunication mobile (1, 202).

25. Programme informatique comprenant des moyens pour mettre en oeuvre le procédé selon l'une des revendications 1 à 23 lorsque le programme informatique est exécuté sur un équipement de traitement de données.

26. Arrangement de terminaux de radiocommunication mobile (1, 202) pour collecter les grandeurs caractéristiques (306, 308) d'un système de radiocommunication mobile (3), notamment d' un réseau de radiocommunication mobile cellulaire (3), avec lequel il existe au moins une mémoire et/ou une unité de traitement de données dans le terminal de radiocommunication mobile (1, 202) et avec lequel les terminaux de radiocommunication mobile (1, 202) disposent de moyens pour, lors du fonctionnement dans le système de radiocommunication mobile (3), collecter, traiter et communiquer au système de radiocommunication mobile (3) les grandeurs caractéristiques (306, 308) selon l'une des revendications de procédé 1 à 23.
